# EUROPÄISCHE PATENTSCHRIFT

(11) **EP 3 410 674 B1**
(45) Veröffentlichungstag und Bekanntmachung des Hinweises auf die Patenterteilung: **22.11.2023**
(21) Anmeldenummer: 18175443.3
(22) Anmeldetag: 01.06.2018
(51) Int. Cl.: H04L 67/12, H04L 67/55, H04L 67/5651, H04L 67/63

(54) **VERFAHREN ZUR DATENÜBERTRAGUNG IN EINEM FAHRZEUG-KOMMUNIKATIONSNETZWERK, FAHRZEUG-KOMMUNIKATIONSNETZWERK, TEILNEHMER UND FAHRZEUG**
VEHICULAR COMMUNICATION NETWORK, SUBSCRIBER AND VEHICLE AND METHOD FOR DATA TRANSMISSION IN A VEHICULAR COMMUNICATION NETWORK
PROCÉDÉ DE TRANSMISSION DE DONNÉES DANS UN RÉSEAU DE COMMUNICATION DE VÉHICULE, RÉSEAU DE COMMUNICATION DE VÉHICULE, PARTICIPANT ET VÉHICULE

(30) Priorität: 01.06.2017 DE 102017209327
(43) Veröffentlichungstag der Anmeldung: 05.12.2018
(73) Patentinhaber: Volkswagen AG, 38436 Wolfsburg (DE); Audi AG, 85045 Ingolstadt (DE)
(72) Erfinder: Lünnemann, Patrick, 14052 Berlin (DE); Bartsch, Patrick, 38442 Wolfsburg (DE)
(74) Vertreter: Patentanwälte Bressel und Partner mbB

(56) Entgegenhaltungen:
- WO-A1-2018/099683
- DE-A1-102014 201 948
- DE-A1-102014 201 954
- DE-A1-102015 103 974
- US-A1- 2012 072 482
- US-A1- 2016 050 265
- US-A1- 2017 124 871

## Beschreibung

Die Erfindung betrifft ein Verfahren zur Datenübertragung in einem Fahrzeug-Kommunikationsnetzwerk und ein Fahrzeug-Kommunikationsnetzwerk sowie einen Teilnehmer des Fahrzeug-Kommunikationsnetzwerks und ein Fahrzeug.

Mit dem Fortschritt der Elektronik, Steuerungs- und Kommunikationstechnik sind in vielen Arten von Fahrzeugen, insbesondere Kraftfahrzeugen, neben einer rein mechanischen oder elektromechanischen Ausstattung Systeme vorhanden, in denen meist eine Vielzahl von Steuergeräten einschließlich Multimedia- und Infotainment-Geräten vorhanden ist. Diese Geräte kommunizieren in der Regel untereinander. Für die Implementierung solcher Kommunikationsverbindungen sind insbesondere verschiedene Bussysteme und Bordnetzsysteme bekannt, wie beispielsweise solche gemäß dem CAN - Controller Area Network - Standard (ISO 11898), dem Flexray-Standard (ISO 17458-1 bis 17458-5), dem LIN - Local Interconnect Network - De-facto Standard, oder dem MOST - Media Oriented Systems Transport - De-facto Standard für Multimedia- und Infotainment-Netzwerke in der Automobilindustrie.

Daneben sind aus dem Bereich der Computertechnik und Netzwerktechnik auch weitere Kommunikationsnetzwerktechniken bekannt, insbesondere Ethernet und die dem Internet zugrundeliegenden IP - Internet Protokoll - Kommunikation mittels Datenpaketen (IP-Paketen). Dabei ist die Internet-Technologie vor allem in so genannten RFC-Standards spezifiziert, wozu insbesondere auch die Standards RFC 2663, RFC2766 (NAT - Network Address Translation) und RFC 3022 (PAT - Port Address Translation) gehören, welche eine automatisierte Umsetzung von Adress- bzw. Portinformationen in Datenpaketen zur Verbindung verschiedener Netze spezifizieren. Diese genannten Standards und Protokolldefinitionen sind aus den Bedürfnissen hochkomplexer und dynamischer Computer- und Kommunikationsnetzwerke entstanden, wie sie in der ITK - Informations- und Telekommunikationsindustrie - oft erforderlich sind.

Inzwischen hat die Verwendung von Ethernet-basierter Kommunikationstechnik auch in Fahrzeugen Einzug gehalten. Ein Beispiel dafür ist das von einem Konsortium von Fahrzeugherstellern entwickelte Kommunikationsprotokoll "SOME/IP" einschließlich "SOME/IP-Service Discovery", das auch in den AUTOSAR-Standard (insbesondere Release 4.1) aufgenommen wurde und eine Lösung für Paket-über-Ethernet-basierte Bordnetz-Kommunikation im Fahrzeug spezifiziert. Dabei werden mittels Ethernet-Kommunikation (Schicht 2 im OSI/ISO Schichtenmodell) TCP/IP-Pakete (Schichten 3 und 4 im OSI/ISO Schichtenmodell) im Sinne von IP-über-Ethernet Kommunikation übermittelt.

Darüber hinaus ist es bekannt, bei der Entwicklung von neuen oder Nachfolgefahrzeugmodellen so weit als möglich auf bereits im Vorgängermodell verfügbare Systeme und Lösungen zurückzugreifen, um eine unnötige Neuentwicklung zu vermeiden. Eine solche Wiederverwendung von Vorgängersystemen kann jedoch dann scheitern, wenn im neuen Fahrzeug zusätzliche Optionen oder Kommunikationsverbindungen erforderlich werden, für die das Vorgängersystem nicht ausgelegt ist und auf die es nicht einfach im Sinne einer Skalierung erweitert werden kann.

Die DE 10 2015 200 947 B3 betrifft eine Paketvermittlungsvorrichtung für ein Paket-über-Ethernet-basiertes Kommunikationsnetzwerk in einem Fahrzeug, insbesondere einem Kraftfahrzeug.

Die DE 10 2014 201 954 A1 betrifft ein Verfahren zur Datenübertragung zwischen mindestens zwei Teilnehmern, wobei mindestens einer der Teilnehmer als ein fahrzeugseitiger Teilnehmer ausgebildet ist, wobei der mindestens eine fahrzeugseitige Teilnehmer mindestens eine virtuelle Maschine bereitstellt oder als virtuelle Maschine ausgebildet ist, wobei mindestens ein weiterer Teilnehmer persistente Daten an die mindestens eine virtuelle Maschine überträgt, sowie ein Kommunikationsnetzwerk und ein Fahrzeug.

Die DE 10 2014 201 948 A1 betrifft ein Verfahren zur Datenübertragung zwischen mindestens zwei Teilnehmern in einem Fahrzeug, wobei ein erster Teilnehmer einen Server in einem Client-Server-Kommunikationsnetzwerk bildet, wobei mindestens ein weiterer Teilnehmer einen Client in dem Client-Server-Kommunikationsnetzwerk bildet, wobei mittels der Datenübertragung eine zustandslose Kommunikation zwischen dem ersten Teilnehmer und dem mindestens einen weiteren Teilnehmer erfolgt, sowie ein Kommunikationsnetzwerk und ein Fahrzeug.

Die nachveröffentlichte DE 10 2016 221 985 offenbart ein Verfahren zur Datenübertragung zwischen mindestens zwei Teilnehmern in einem Fahrzeug-Kommunikationsnetzwerk eines Hauptantrag

Fahrzeugs, wobei mindestens ein Teilnehmer des Fahrzeug-Kommunikationsnetzwerks ein Fahrzeug-Teilnehmer ist, der in dem Fahrzeug angeordnet ist.

In der Regel umfasst ein Fahrzeug-Kommunikationsnetzwerk auch Teilnehmer, die eine Ausgabe von Informationen, insbesondere von anderen Teilnehmern des Fahrzeug-Kommunikationsnetzwerk bereitgestellten Informationen, an einen Nutzer durchführen bzw. steuern. Problematisch bei einem Fahrzeug-Kommunikationsnetzwerk mit solchen Teilnehmer ist eine zeitlich schnelle, ressourceneffiziente und dabei zuverlässige Ausgabe der Informationen.

Die US 2016/0050265 A1 offenbart ein Fahrzeugdatensystem.

Die US 2012/0072482 A1 offenbart einen Zugang zu Datenbanken an Bord eines Flugzeugs.

Die WO 2018/099683 A1 offenbart ein Verfahren zur Datenübertragung in einem Fahrzeug-Kommunikationsnetzwerk, ein Fahrzeug- Kommunikationsnetzwerk, ein Teilnehmer und ein Fahrzeug.

Es stellt sich daher das technische Problem, ein Verfahren zur Datenübertragung in einem Fahrzeug-Kommunikationsnetzwerk, ein Kommunikationsnetzwerk sowie einen Teilnehmer eines solchen Kommunikationsnetzwerks und ein Fahrzeug zu schaffen, die eine zeitlich schnelle, ressourceneffiziente und dabei zuverlässige Ausgabe von Informationen an Nutzer des Fahrzeugs ermöglichen.

Die Lösung des technischen Problems ergibt sich durch die Gegenstände mit den Merkmalen der Ansprüche 1 und 9. Weitere vorteilhafte Ausgestaltungen der Erfindung ergeben sich aus den Unteransprüchen.

Vorgeschlagen wird ein Verfahren zur Datenübertragung zwischen mindestens zwei Teilnehmern in einem Fahrzeug-Kommunikationsnetzwerk eines Fahrzeugs. Ein Fahrzeug im Sinne dieser Erfindung kann ein Landfahrzeug, ein Wasserfahrzeug, ein Luftfahrzeug oder ein beliebiges anderes Fahrzeug zum Transport von Menschen und/oder Material sein. Vorzugsweise ist ein Fahrzeug ein Kraftfahrzeug, insbesondere ein Automobil.

Ein Teilnehmer kann insbesondere ein Steuergerät des Fahrzeugs sein. Alternativ kann ein Teilnehmer aber auch ein fahrzeugexternes Gerät, z.B. ein mobiles Endgerät wie ein Mobilfunktelefon, ein Tablet-PC oder Ähnliches, oder eine fahrzeugexterne Recheneinrichtung, z.B. eine fahrzeugexterne Servereinrichtung, sein. Mindestens ein Teilnehmer des Fahrzeug-Kommunikationsnetzwerks ist ein Fahrzeug-Teilnehmer. Hierbei bezeichnet ein Fahrzeug-Teilnehmer einen Teilnehmer, der in dem Fahrzeug angeordnet ist. Der Fahrzeug-Teilnehmer ist fest im Fahrzeug verbaut. Weiter insbesondere kann der Fahrzeug-Teilnehmer ein Steuergerät des Fahrzeugs sein.

Das Fahrzeug-Kommunikationsnetzwerk kann selbstverständlich mehr als zwei Teilnehmer umfassen, wobei die weiteren Teilnehmer Fahrzeug-Teilnehmer oder fahrzeugexterne Teilnehmer sein können.

Teilnehmer des Fahrzeug-Kommunikationsnetzwerks können einen Server oder einen Client in dem Fahrzeug-Kommunikationsnetzwerk bilden. Allerdings sind die Teilnehmer nicht dauerhaft auf die Funktion eines Servers oder Clients festgelegt. So ist es möglich, dass ein Teilnehmer für einen oder mehrere Datenübertragungsvorgänge einen Server und für einen oder mehrere davon verschiedene Übertragungsvorgänge einen Client bereitstellt.

Hierbei kann ein Server einen Teilnehmer bezeichnen, der einen oder mehrere Dienste, die auch als Service bezeichnet werden können, bereitstellt oder anbietet. Beispielsweise kann ein Server einen Dienst anbieten, der Informationen über eine Geschwindigkeit des Fahrzeugs über das Fahrzeug-Kommunikationsnetzwerk bereitstellt. Auch kann als Dienst eine Information über eine Motortemperatur über das Fahrzeug-Kommunikationsnetzwerk bereitgestellt werden. Auch kann als Dienst eine Veränderung der Lautstärke einer Wiedergabe von Audioinformationen über das Fahrzeug-Kommunikationsnetzwerk bereitgestellt werden. Auch kann als Dienst ein Pausieren oder ein Stoppen der Ausgabe von aktuell wiedergegebenen Audioinformationen bereitgestellt werden. Die erläuterten Dienste sind hierbei rein exemplarisch. Selbstverständlich kann noch eine Vielzahl von weiteren Diensten von Servern über das Fahrzeug-Kommunikationsnetzwerk bereitgestellt werden. Derartige Dienste sind dem Fachmann selbstverständlich bekannt.

Ein Dienst kann insbesondere eine festgelegte Funktion sein, die ein Server anbietet und ein Client nutzen kann. Ein Dienst kann insbesondere ortsunabhängig genutzt werden. Vorzugsweise wird ein Dienst derart angeboten, dass ein den Dienst nutzender Client keine Informationen über die Implementierung des Dienstes für dessen Nutzung/Ausführung benötigt. Dies führt zur Reduktion oder vollständigen Aufhebung von Abhängigkeiten zwischen der Nutzung von Diensten und deren Implementierung. Schnittstellen eines Dienstes können insbesondere auf- und abwärtskompatibel ausgebildet sein. Bei der Nutzung eines Dienstes können insbesondere etablierte Standards zur Kommunikation mit dem Ziel einer guten Wartbarkeit und Wiederverwertbarkeit eingesetzt werden. Weiter kann ein Dienst als Operation bezeichnet werden oder bei der Ausführung eines Dienstes mindestens eine Operation durchgeführt werden.

Ein Client kann einen Teilnehmer bezeichnen, der einen angebotenen oder bereitgestellten Dienst nutzt.

Das Fahrzeug-Kommunikationsnetzwerk kann insbesondere ein Ethernet-basiertes Kommunikationsnetzwerk sein. In einem solchen Kommunikationsnetzwerk kann eine Datenübertragung erfolgen, in dem Datenpakete über das Kommunikationsnetzwerk zwischen Teilnehmern übertragen werden. Die Teilnehmer können entsprechende Ethernet-Schnittstellen aufweisen. Die Datenübertragung kann hierbei entsprechend bekannter Übertragungsprotokolle erfolgen.

Ein Teilnehmer kann hierbei eine Steuer- und Auswerteeinrichtung zur Steuerung der Datenübertragung und zur Auswertung von Antworten bzw. der darin enthaltenen Informationen umfassen. Eine solche Steuer- und Auswerteeinrichtung kann beispielsweise durch einen Mikrocontroller bereitgestellt werden.

Zu übertragende Daten, insbesondere Datenpakete, können eine Zieladressierung, die insbesondere durch eine Adressierung eines einzigen Ziels gegeben sein kann, enthalten. Weiter können zu übertragende Daten, insbesondere Datenpakete, eine Quelladressierung enthalten. Die Adressierung von Zielen und Quellen in dem Netzwerk kann dabei insbesondere jeweils mittels einer entsprechenden Ethernetadresse/Netzwerkadresse/Port-Kombination für den Zielknoten bzw. Quellknoten erfolgen. Im OSI/ISO Schichtenmodel kann in der Regel die Ethernetadresse (d. h. "Ethernet Media Access Control"(MAC)-Adresse) der Schicht 2, die Netzwerkadresse (z. B. IP-Adresse) der Schicht 3 und der Port (z. B. TCP-Port oder UDP-Port) der Schicht 4 zugeordnet werden. Unter einer "Ethernetadresse/Netzwerkadresse/Port-Kombination" im Sinne der Erfindung kann eine Zusammenfassung einer Ethernetadresse/Netzwerkadresse (z. B. IP-Adresse) mit einem zugeordneten Port zu verstanden werden. Eine Ziel-Ethernetadresse/Netzwerkadresse/Port-Kombination enthält somit die in den Daten spezifizierte Ziel-Ethernetadresse, Ziel-Netzwerkadresse sowie den zugeordneten Ziel-Port. Analog enthält eine Quell-Ethernetadresse/Netzwerkadresse/Port-Kombination die in den Daten spezifizierte Quell-Ethernetadresse, Quell-Netzwerkadresse sowie den zugeordneten Quell-Port. Auf Basis solcher Ethernetadresse/Netzwerkadresse/Port-Kombinationen kann eine Vermittlung der Daten im Fahrzeug-Kommunikationsnetzwerk erfolgen.

Unter einem "Port" im Sinne der Erfindung ist ein Zusatz zu einer Netzwerkadresse zu verstehen, der die Zuordnung von Verbindungen und Daten zu Server- und Client-Programmen beim Sender-Teilnehmer bzw. beim Empfänger-Teilnehmer bewirkt. So ist es damit etwa möglich, Daten zu verschiedenen von einem Server bereitgestellten Diensten einem Empfänger (Client) zur Verfügung zu stellen und dort den entsprechenden dienstbezogenen Anwendungen separat zuzuordnen, obwohl die Daten beider Dienste von einer selben Netzwerkadresse (z. B. IP-Adresse) des Senders zu einer einzigen Netzwerkadresse des Empfängers übermittelt wurden. Dienste können also über verschiedene Ports zur selben Ethernetadresse/Netzwerkadresse, z.B. MAC/IP-Adresse, bereitgestellt werden.

Unter einer "Ethernet-Schnittstelle" im Sinne der Erfindung ist eine Vorrichtung einer technischen Entität zu verstehen, mittels derer eine Ethernet-Kommunikationsverbindung mit wenigstens einer anderen technischen Entität bereitgestellt werden kann. Eine solche technische Entität kann etwa ein Netzwerkknoten in einem Ethernet-Kommunikationsnetzwerk sein. Insbesondere kann eine Ethernet-Schnittstelle physikalisch eine Anschlussvorrichtung zum Anschluss an eine Leitung für die Ethernet-Übertragung, insbesondere an eine genormte Ethernet-Leitung, aufweisen. Darüber hinaus kann die Kommunikationsschnittstelle Mittel zur Datenverarbeitung oder Aufbereitung aufweisen, mittels derer Daten oder andere Informationen senderseitig auf vorbestimmte Art und Weise übermittelt bzw. empfangsseitig gemäß den standardisierten Anforderungen von Ethernet-Kommunikation verarbeitet werden können.

Unter einem "Fahrzeug" im Sinne der Erfindung ist jede Art von Fahrzeug zu verstehen, mittels dessen eine oder mehrere Personen und/oder Ladung transportiert werden kann. Insbesondere ist ein Personenkraftwagen (PKW), ein Lastkraftwagen (LKW), ein Motorrad, ein Bus, ein Fahrrad oder ein Anhänger zu einem der vorausgehend genannten Fahrzeuge ein Fahrzeug im Sinne der Erfindung. Dies gilt insbesondere auch für die Zugeinheit sowie die Anhänger eines Zuges sowie für ein Wasserfahrzeug oder ein Luftfahrzeug, insbesondere ein Flugzeug.

Unter "konfiguriert" im Sinne der Erfindung ist zu verstehen, dass die entsprechende Vorrichtung bereits eingerichtet ist, eine bestimmte Funktion zu erfüllen. Unter "konfigurierbar" ist in Erweiterung dessen zu verstehen, dass die entsprechende Vorrichtung so einstellbar ist, dass sie bei entsprechender Einstellung eingerichtet ist, die bestimmte Funktion zu erfüllen. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen.

Weiter bildet ein Teilnehmer des Fahrzeug-Kommunikationsnetzwerks einen Notifikations-Manager des Fahrzeug-Kommunikationsnetzwerks oder stellt einen Notifikations-Manager bereit. Ein Notifikations-Manager kann auch als Notifikations-Server bezeichnet werden. Zur Bereitstellung oder Ausbildung des Notifikations-Managers kann also der Fahrzeug-Teilnehmer die Funktionen eines Servers ausführen.

Weiter bildet der Fahrzeug-Teilnehmer den Notifikations-Manager des Fahrzeug-Kommunikationsnetzwerks oder stellt den Notifikations-Manager bereit.

Ein Notifikations-Manager dient hierbei zum Empfang und zur weiteren Übertragung, insbesondere zur Verteilung, von Notifikations-Daten. Notifikations-Daten umfassen hierbei Daten, die an einen Nutzer des Fahrzeug-Kommunikationsnetzwerks ausgebbare Informationen kodieren. Neben derartigen Daten können Notifikations-Daten jedoch auch Informationen kodieren, die nicht oder nicht zwingend an einen Nutzer ausgegeben werden müssen oder können.

Ein Nutzer des Fahrzeug-Kommunikationsnetzwerks kann insbesondere ein Fahrzeuginsasse, z.B. ein Fahrzeugführer aber auch ein vom Fahrzeugführer verschiedener Fahrzeuginsasse, sein. Es ist jedoch auch möglich, dass ein Nutzer des Fahrzeug-Kommunikationsnetzwerks ein nicht im Fahrzeug angeordneter Nutzer ist.

Unter "ausgebbar" im Sinne dieser Offenbarung ist zu verstehen, dass die Information dem Nutzer übermittelt werden kann, beispielsweise durch mindestens eine geeignete Ausgabeeinrichtung. Die Information kann hierbei z.B. visuell, d.h. optisch, akustisch, haptisch oder in einer anderen, geeigneten Form ausgegeben werden. Beispielsweise kann der Inhalt auf einer Anzeigeeinrichtung des Fahrzeugs, beispielsweise einem Head-up-Display, einer Head-Unit, einem Kombiinstrument, einem Mitten-Display oder einer Anzeigeeinrichtung eines Infotainmentsystems zur Anzeige gebracht werden. Es ist jedoch auch möglich, dass der Inhalt auf einer Anzeigeeinrichtung eines nicht im Fahrzeug fest verbauten Teilnehmers, z.B. auf einem Mobilfunktelefon, zur Anzeige gebracht wird. Auch kann der Inhalt akustisch ausgeben werden, z.B. durch mindestens einen Lautsprecher.

Hierbei überträgt ein notifizierender Teilnehmer des Fahrzeug-Kommunikationsnetzwerks die Notifikations-Daten an den Notifikations-Manager. Weiter können Notifikations-Daten weitere Informationen kodieren. Weiter überträgt der Notifikations-Manager zumindest einen Teil der, vorzugsweise die gesamten, vom notifizierenden Teilnehmer übertragenen Notifikations-Daten an mindestens einen, vorzugsweise jedoch an mehrere, zu notifizierende(n) Teilnehmer des Fahrzeug-Kommunikationsnetzwerks.

Hierbei kann der notifizierende Teilnehmer des Fahrzeug-Kommunikationsnetzwerks die Notifikations-Daten erzeugen. Diese können nach der Übertragung an den Notifikations-Manager von diesem abrufbar gespeichert werden, insbesondere für eine vorbestimmte Zeitdauer. Nach Ablauf der vorbestimmten Zeitdauer können die Notifikations-Daten von dem Notifikations-Manager gelöscht werden. Auch können die Notifikations-Daten durch den Notifikations-Manager gelöscht werden, wenn der Notifikations-Manager eine erledigende Bearbeitung der Notifikations-Daten, z.B. durch einen Teilnehmer, detektiert. Eine erledigende Bearbeitung kann beispielsweise detektiert werden, wenn eine entsprechende Eigenschaft, insbesondere die nachfolgend noch erläuterte Eigenschaft "selectedAction", eines vom Notifikations-Manager gespeicherten Notifikations-Objekts bereits gesetzt ist. Diese Eigenschaft kann z.B. durch den die erledigende Bearbeitung durchführenden Teilnehmer gesetzt werden.

Es ist möglich, dass der Notifikations-Manager die Notifikations-Daten nur dann an einen zu notifizierenden Teilnehmer überträgt, falls dieser sich als Empfänger von Notifikations-Daten bei dem Notifikations-Manager registriert hat. Die Registrierung kann hierbei also vor der Übertragung von Notifikations-Daten erfolgen. Hierbei kann der Notifikations-Manager den zu notifizierenden Teilnehmern jeweils eine eindeutige Identifikation zuordnen. Auch kann der Notifikations-Manager den einem notifizierenden Teilnehmer eine eindeutige Identifikation zuordnen.

Insbesondere kann die Registrierung erfolgen, wenn sich der zu notifizierende Teilnehmer bzw. der notifizierende Teilnehmer im Fahrzeug-Kommunikationsnetzwerk anmeldet und/oder wenn das Fahrzeug-Kommunikationsnetzwerk aufgebaut wird. Durch die Registrierung kann dem zu notifizierenden Teilnehmer bzw. dem notifizierenden Teilnehmer eine teilnehmerspezifische Adresse zugewiesen werden, z.B. durch den Notifikations-Manager. Diese kann dann zur Übertragung von Daten, insbesondere Notifikations-Daten, genutzt werden.

Bei der Registrierung eines notifizierenden Teilnehmers kann beispielsweise ein nachfolgend noch näher erläutertes Issuer-Objekt erzeugt werden.

Die Übertragung von Notifikations-Daten von dem Notifikations-Manager an den zu notifizierenden Teilnehmer erfolgt unmittelbar, insbesondere sobald die Übertragung möglich ist. So ist keine gesonderte Abfrage oder Freigabe der Übertragung der Notifikations-Daten notwendig. Nicht erfindungsgemäß beschrieben wird, dass die Übertragung der vom Notifikations-Manager empfangenen und gegebenenfalls gespeicherten Notifikations-Daten erst dann erfolgt, wenn diese Übertragung von dem zu notifizierenden Teilnehmer abgefragt oder freigegeben wird. So ist es beispielsweise vorstellbar, dass der zu notifizierende Teilnehmer wiederholt das Vorhandensein von Notifikations-Daten, insbesondere von noch nicht an ihn übertragenen Notifikations-Daten, beim Notifikations-Manager abfragt und/oder dass der Notifikations-Manager eine Information über das Vorhandensein von Notifikations-Daten, insbesondere von noch nicht übertragenen Notifikations-Daten, an den zu notifizierenden Teilnehmer überträgt, wobei dieser dann entscheidet, ob und wann die Notifikationsdaten vom Notifikations-Manager abgefragt werden sollen.

Der Notifikations-Manager dient somit zusammenfassend zur Sammlung und Bereitstellung von Notifikations-Daten für Teilnehmer des Fahrzeug-Kommunikationsnetzwerks, die die Ausgabe der durch die Notifikations-Daten kodierten Informationen an einen Nutzer zumindest teilweise durchführen oder steuern können. Somit ist ein zu notifizierender Teilnehmer ein Teilnehmer, der eine Ausgabe der durch die Notifikations-Daten kodierten ausgebbaren Informationen an einen Nutzer zumindest teilweise durchführen oder steuern kann.

Die Ausgabe der kodierten Informationen kann dann teilnehmerspezifisch erfolgen. Insbesondere kann die Art der Ausgabe, z.B. eine akustische, optische oder haptische Ausgabe, durch den Teilnehmer festgelegt sein. Auch kann festgelegt sein, ob die gesamten von den Notifikations-Daten kodierten Informationen oder nur ein, insbesondere teilnehmerspezifischer, Teil dieser Informationen ausgegeben wird.

Hierbei kann jedoch der Notifikations-Manager an jeden zu notifizierenden Teilnehmer die gleichen Notifikations-Daten, insbesondere Notifikations-Daten mit dem gleichen Inhalt, übertragen. Mit anderen Worten erfolgt keine Filterung, Verarbeitung oder Anpassung der Notifikations-Daten durch den Notifikations-Manager.

Hierdurch ergibt sich in vorteilhafter Weise eine wenig Ressourcen beanspruchende, zeitlich schnelle und zuverlässige Übertragung von Notifikations-Daten in dem Fahrzeug-Kommunikationsnetzwerk, die wiederum die zuverlässige und geeignete Ausgabe der in den Notifikations-Daten kodierten ausgebbaren Informationen an Nutzer des Fahrzeug-Kommunikationsnetzwerks sicherstellt.

In einer weiteren Ausführungsform führt der zu notifizierende Teilnehmer eine Ausgabe zumindest eines Teils der in den Notifikations-Daten kodierten Informationen an einen Nutzer durch. Somit ist der zu notifizierende Teilnehmer ein sogenannter ausgabefähiger Teilnehmer. Die Ausgabe kann in Form einer Wiedergabe, beispielsweise einer grafischen oder akustischen Wiedergabe erfolgen.

Voneinander verschiedene zu notifizierende Teilnehmer können somit die gleichen ausgebbaren Inhalte der an diese Teilnehmer übertragenen Notifikations-Daten in verschiedener Form ausgeben. Alternativ oder kumulativ können diese verschiedenen Teilnehmer auch verschiedene Teile der ausgebbaren Inhalte, z.B. einen Bildinhalt oder einen Textinhalt oder einen Audioinhalt, ausgeben.

Es ist möglich, dass an alle zu notifizierenden Teilnehmer die gleichen Notifikations-Daten übertragen werden. Es ist allerdings auch möglich, dass an bestimmte und voneinander verschiedene zu notifizierende Teilnehmer verschiedene Teile der Notifikations-Daten übertragen werden. So kann beispielsweise nur ein teilnehmerspezifischer Teil der Notifikations-Daten und nicht alle Notifikations-Daten an einen zu notizifierenden Teilnehmer übertragen werden. Somit können verschiedene Teile der Notifikations-Daten an verschiedene Teilnehmer übertragen werden. Eine entsprechende Filterung wird nachfolgend noch näher erläutert.

Hierdurch ergibt sich in vorteilhafter Weise eine zuverlässige und an verschiedene Teilnehmer angepasste Ausgabe von Informationen an einen Nutzer des Fahrzeug-Kommunikationsnetzwerks.

Erfindungsgemäß kodieren die Notifikations-Daten Informationen über mindestens eine Dienst-Adresse, wobei unter der kodierten Dienst-Adresse ein von einem Teilnehmer bereitgestellter Dienst aufrufbar ist. Der Teilnehmer kann insbesondere der notifizierende Teilnehmer sein. Es ist jedoch auch möglich, dass die Dienstadresse eine Adresse von einem Teilnehmer ist, der von dem zu notifizierenden Teilnehmer verschieden ist. Eine Dienst-Adresse kann in Form eines URI angegeben sein. Die Dienst-Adresse ist erfindungsgemäß eine Eigenschaft eines Aktions-Objekts. Dies wird nachfolgend noch näher erläutert.

Beispielsweise kann der notifizierende Teilnehmer Dienste im Fahrzeug-Kommunikationsnetzwerk bereitstellen, beispielsweise einen Pause-Dienst, einen Abspiel-Dienst und einen Stopp-Dienst für die Wiedergabe von Audioinhalten. Die Dienstadresse kann dann z.B. eine Adresse sein, an die ein Signal zum Pausieren, Abspielen oder Stoppen der Audiowiedergabe übertragen werden kann, insbesondere in Form einer Anfrage. Hierdurch ergibt sich in vorteilhafter Weise eine zeitlich schnelle und effiziente Steuerung der Ausführung von Diensten im Fahrzeug-Kommunikationsnetzwerk.

In einer weiteren Ausführungsform kodieren die Notifikations-Daten Informationen über mindestens eine Notifikations-Reaktion. Auch diese Informationen können ausgegeben werden. Eine Notifikations-Reaktion kann eine Aktion sein, die durch mindestens einen Teilnehmer des Fahrzeug-Kommunikationsnetzwerks durchführbar ist, insbesondere wenn eine entsprechende Nutzereingabe oder Nutzeraktivität durchgeführt wird. Die Aktion kann hierbei als Reaktion auf einen ausgegebenen Inhalt der Notifikations-Daten durchgeführt werden. Somit kann die Notifikations-Reaktion in Zusammenhang mit dem ausgebbaren Inhalt der Notifikations-Daten stehen. Beispielsweise kann eine Aktion zu dem vorhergehend erläuterten Pausieren, Abspielen oder Stoppen der Audiowiedergabe führen.

Weiter ist der Notifikations-Reaktion mindestens ein Dienst zugeordnet, der von einem Teilnehmer des Fahrzeug-Kommunikationsnetzwerks bereitgestellt wird. Der Teilnehmer kann wiederum der notifizierende Teilnehmer oder ein davon verschiedener Teilnehmer sein. Insbesondere kann der Notifikations-Reaktion die vorhergehend erläuterte Dienst-Adresse zugeordnet sein, die durch die Notifikations-Daten kodiert wird. Die Informationen über die Notifikations-Reaktion können z.B. als Eigenschaft eines Notifikations-Objekts kodiert sein, z.B. als Aktion. Diese Eigenschaft kann z.B. als Aktions-Objekt kodiert sein oder auf ein Aktions-Objekt verweisen.

Kodieren die Notifikations-Daten Informationen über mindestens eine Dienstadresse oder über mindestens eine Notifikations-Reaktion, so können die Notifikations-Daten auch als interaktive Notifikations-Daten bezeichnet werden.

In diesem Fall kann durch den zu notifizierenden Teilnehmer auch eine Ausgabe von Informationen über die Notifikations-Reaktion durchgeführt bzw. gesteuert werden. Beispielsweise können einem Nutzer ein Pause-Symbol, ein Abspiel-Symbol (Play-Symbol) oder ein Stopp-Symbol ausgegeben, insbesondere dargestellt, werden. Diese Symbole können einem Betätigungselement, beispielsweise einer Taste oder einem vorbestimmten Bereich eines Touchscreens, zugeordnet sein. Somit kann dem Nutzer vermittelt und durch diesen erfasst werden, dass durch Betätigen des entsprechenden Betätigungselements die durch das Symbol repräsentierte Notifikations-Reaktion durchführbar ist.

In einer weiteren Ausführungsform wird eine Nutzer-Reaktion detektiert und mindestens eine von einem Teilnehmer, insbesondere von dem notifizierenden Teilnehmer oder einem davon verschiedenen Teilnehmer, bereitgestellter reaktionsspezifischer Dienst aufgerufen, wenn die Nutzer-Reaktion detektiert wurde. Die Nutzer-Reaktion kann beispielsweise detektiert werden, falls der Nutzer ein der Reaktion zugeordnetes Betätigungselement betätigt. Dies wurde vorhergehend bereits erläutert. Auch kann die Nutzer-Reaktion detektiert werden, wenn ein der Reaktion zugeordneter Sprachbefehl des Nutzers erfasst wird. In diesem Fall wird durch den notifizierten Teilnehmer der unter der in den Notifikations-Daten kodierten Dienst-Adresse bereitgestellte Dienst aufgerufen.

Hierdurch ergibt sich in vorteilhafter Weise eine zuverlässige und zeitlich schnelle Information und Ausführung von im Fahrzeug-Kommunikationsnetzwerk bereitgestellten Diensten.

Auch beschrieben wird, dass die Notifikations-Daten keine Information über eine Notifikations-Reaktion kodieren. In diesem Fall können die Notifikations-Daten auch als passive Notifikations-Daten bezeichnet werden. Insbesondere können die Notifikations-Daten in diesem Fall auch keine Informationen über eine Dienst-Adresse kodieren, unter der ein von einem Teilnehmer bereitgestellter Dienst aufrufbar ist. Mit anderen Worten können passive Notifikations-Daten nur solche Informationen kodieren, die an einen Nutzer auszugeben sind, ohne dass eine Reaktion des Nutzers erforderlich ist. Diese können auch als rein informative Informationen bezeichnet werden. Derartige Notifikations-Daten können beispielsweise den Inhalt einer Text-Nachricht kodieren, welcher von einem Mobilfunkgerät empfangen und auf einer Anzeigeeinrichtung des Fahrzeugs zur Anzeige gebracht werden soll.

Hierdurch ergibt sich in vorteilhafter Weise eine verringerte zu übertragende Datenmenge für Fälle, in denen keine Reaktion auf Notifikations-Daten erforderlich ist.

Weiter erfindungsgemäß werden die Notifikations-Daten in Form eines Datenobjekts übertragen. Ein Datenobjekt zur Übertragung von Notifikations-Daten kann auch als Notifikations-Objekt bezeichnet werden. Hierbei kann der Notifikations-Manager das Notifikations-Objekt verwalten.

Ein Notifikations-Objekt kann eine, mehrere oder alle der in Tabelle 1 aufgelisteten Eigenschaften aufweisen. Selbstverständlich kann ein Notifikations-Objekt aber auch noch weitere und/oder alternative Eigenschaften aufweisen.

**Tabelle 1**

| Name | Beschreibung | Typus | Format |
|---|---|---|---|
| Actions | Datenfeld mit Verweisen auf mögliche Aktionen | Datenfeld | |
| Badge | Bild zur Repräsentation der Notifikation | String | URI |
| Content | Klartext des Notifikationsinhalts | String | |
| creationTime | Zeitpunkt der Erstellung des Notifikations-Objekts | String | Datum-Uhrzeit |
| defaultAction | Verweis auf Standard-Aktion, die bei Durchführung einer Standard-Nutzer-Reaktion durchgeführt wird | Objekt | |
| dismissAction | Verweis auf Aktion, die beim Verwerfen der Notifikation durchgeführt wird | Objekt | |
| eventTime | Zeitpunkt des Ereignis, welches die Erstellung der Notifikations auslöste | String | Datum-Uhrzeit |
| Icon | Bild zur Repräsentation des Notifikationsinhalts | String | URI |
| Id | Identifikation | String | UUID |
| isUrgent | Prioritätswert, der die Notwendigkeit einer Bestätigung durch einen notifizierten Teilnehmer repräsentiert | Boolean | |
| Issuer | Information über den Teilnehmer, der das Notifikations-Objekt erstellt hat | Objekt | |
| listContent | Als Liste formatierter Inhalt | Array | |
| Name | Titel des Notifikations-Objekts | String | |
| Priority | Information über Prioritätslevel, kann die Wert "am niedrigsten, niedrig, neutral, hoch, am höchsten" annehmen | String | |
| Progress | Information über Fortschritt-Status, kann Werte von [-inf ...100] annehmen | integer | |
| Requirelnterac tion | Wert, der die Notwendigkeit einer Verfügbarkeit bis zur Aktivierung oder Verwerfung der Notifikation durch einen Nutzer repräsentiert | Boolean | |
| selectedAction | Verweis auf eine durchzuführende Aktion, kann von einem Teilnehmer gesetzt werden | Objekt | |
| State | Status der Durchführung oder Operation, kann die Werte "fehlgeschlagen, laufend, wartend, pausierend, beendet" annehmen | string | |
| URI | Objekt-URI (Objekt-Uniform Resource Identifier) | String | URI |
| VoicePrompt | Ergänzende Aufforderung zur Sprachausgabe | String | |

Auf Notifikations-Objekte kann zugegriffen werden, beispielsweise durch eine Get-Operation. Notifikations-Objekte können erstellt werden, z.B. durch eine Post-Operation. Der Zugriff auf und das Erstellen von Notifikations-Objekten kann hierbei auf einer so genannten Ressourcen-Ebene erfolgen. Der Zugriff und das Erstellen kann hierbei von dem Notifikations-Manager ermöglicht werden. Allerdings können auch andere Teilnehmer des Fahrzeug-Kommunikationsnetzwerks auf Notifikations-Objekte zugreifen bzw. diese erstellen. Für das Erstellen von Notifikations-Objekten kann die Angabe einer, mehrerer oder aller der folgend angeführten Eigenschaften zwingend sein: badge, content, creationTime, defaultAction, dismissAction, eventTime, icon, isUrgent, issuer, listConent, name, priority, progress, requirelnteraction, selectedAction, state, voicePrompt.

Auf Eigenschaften von Notifikations-Objekte kann zugegriffen werden, beispielsweise durch eine Get-Operation. Eigenschaften von Notifikations-Objekten können verändert oder erstellt werden, z.B. durch eine Post-Operation. Eigenschaften von Notifikations-Objekten können gelöscht werden, z.B. durch eine Delete-Operation. Hierzu können die Notifikations-Objekte über ihre UUID (universally unique identifier) adressiert werden.

Der Zugriff auf, das Erstellen/Verändern von und/oder das Löschen von Eigenschaften von Notifikations-Objekten kann hierbei auf einer so genannten Element-Ebene erfolgen. Der Zugriff, das Erstellen/Verändern und/oder das Löschen kann hierbei von dem Notifikations-Manager ermöglicht werden. Allerdings können auch andere Teilnehmer des Fahrzeug-Kommunikationsnetzwerks auf Eigenschaften von Notifikations-Objekte zugreifen bzw. diese erstellen oder verändern oder löschen. Für das Erstellen oder Verändern von Eigenschaften von Notifikations-Objekten kann die Angabe einer oder beider der folgend angeführten Eigenschaften zwingend sein: progress, state.

Zur Durchführung des vorgeschlagenen Verfahrens können die Teilnehmer des Fahrzeug-Kommunikations-Netzwerks auch Daten in Form von Aktions-Objekten, in Form von Issuer-Objekten oder in Form von Whitelist-Objekten übertragen.

Aktions-Objekte kodieren hierbei Informationen über Eigenschaften von Aktionen, insbesondere über Nutzer-Reaktionen. Issuer-Objekte kodieren hierbei Informationen über Teilnehmer, die Notifikations-Daten bzw. Notifikations-Objekte erzeugen. Diese können den notifizierenden Teilnehmern entsprechen. Whitelist-Objekte kodieren hierbei Informationen über notifizierende Teilnehmer, deren Notifikations-Daten bzw. Notifikations-Objekte an den zu notifizierenden Teilnehmer übertragen werden sollen.

Hierbei kann der Notifikations-Manager die Aktions-Objekte und/oder die Issuer-Objekte und/oder die Whitelist-Objekte verwalten.

Ein Aktions-Objekt kann eine, mehrere oder alle der in Tabelle 2 aufgelisteten Eigenschaften aufweisen. Selbstverständlich kann ein Aktions-Objekt aber auch noch weitere und/oder alternative Eigenschaften aufweisen.

**Tabelle 2**

| Name | Eigenschaft | Typus | Format |
|---|---|---|---|
| callbackBody | Informationen, die zwingend Teil einer Reaktions-Anfrage sind | String | |
| callbackHeader | HTTP Header-Informationen, die zwingend Teil einer Reaktions-Anfrage sind | String | |
| callbackMethod | HTTP Ausdruck für die Nutzer-Reaktion, kann den Wert "Get, Delete, Post, Put" annehmen | String | |
| callbackURI | URI, unter der die Nutzer-Reaktion angefragt wird | String | URI |
| icon | Bild zur Repräsentation der Aktion | String | URI |
| Name | Name der Aktion | String | |
| Id | Identifikation | String | UUID |
| Objekt-URI (Objekt-Uniform Resource Identifier) | String | URI | |

Auf Aktions-Objekte kann zugegriffen werden, beispielsweise durch eine Get-Operation. Aktions-Objekte können erstellt werden, z.B. durch eine Post-Operation. Der Zugriff auf und das Erstellen von Aktions-Objekten kann hierbei auf der Ressourcen-Ebene erfolgen. Der Zugriff und das Erstellen kann hierbei von dem Notifikations-Manager ermöglicht werden. Allerdings können auch andere Teilnehmer des Fahrzeug-Kommunikationsnetzwerks auf Aktions-Objekte zugreifen bzw. diese erstellen. Für das Erstellen von Aktions-Objekten kann die Angabe einer, mehrerer oder aller der folgend angeführten Eigenschaften zwingend sein: callbackBody, callbackHeader, callbackMethod, callbackURI, icon, name.

Auf Eigenschaften von Aktions-Objekten kann zugegriffen werden, beispielsweise durch eine Get-Operation. Eigenschaften von Aktions-Objekten können verändert oder erstellt werden, z.B. durch eine Post-Operation. Eigenschaften von Aktions-Objekten können gelöscht werden, z.B. durch eine Delete-Operation. Hierzu können die Aktions-Objekte über die UUID adressiert werden.

Der Zugriff auf, das Erstellen/Verändern von und/oder das Löschen von Eigenschaften von Aktions-Objekten kann hierbei auf der so genannten Element-Ebene erfolgen. Der Zugriff, das Erstellen/Verändern und/oder das Löschen kann hierbei von dem Notifikations-Manager ermöglicht werden. Allerdings können auch andere Teilnehmer des Fahrzeug-Kommunikationsnetzwerks auf Eigenschaften von Aktions-Objekte zugreifen bzw. diese erstellen oder verändern oder löschen. Für das Erstellen oder Verändern von Eigenschaften von Aktions-Objekten kann die Angabe einer oder beider der folgend angeführten Eigenschaften zwingend sein: callbackBody, callbackHeader, callbackMethod, callbackURI, icon, name.

Ein Issuer-Objekt kann eine, mehrere oder alle der in Tabelle 3 aufgelisteten Eigenschaften aufweisen. Selbstverständlich kann ein Issuer-Objekt aber auch noch weitere und/oder alternative Eigenschaften aufweisen.

**Tabelle 3**

| Name | Eigenschaft | Typus | Format |
|---|---|---|---|
| Active | Information über Zustand bezüglich der Notifikations-Daten-Erzeugung, kann Werte "on" oder "off" annehmen | Boolean | |
| Name | Name der Aktion | String | |
| Id | Identifikation | String | UUID |
| Objekt-URI (Objekt-Uniform Resource Identifier) | String | URI | |

Auf Issuer-Objekte kann zugegriffen werden, beispielsweise durch eine Get-Operation. Issuer-Objekte können erstellt werden, z.B. durch eine Post-Operation. Der Zugriff auf und das Erstellen von Aktions-Objekten kann hierbei auf der Ressourcen-Ebene erfolgen. Der Zugriff und das Erstellen kann hierbei von dem Notifikations-Manager ermöglicht werden. Allerdings können auch andere Teilnehmer des Fahrzeug-Kommunikationsnetzwerks auf Issuer-Objekte zugreifen bzw. diese erstellen.

Auf Eigenschaften von Issuer-Objekten kann zugegriffen werden, beispielsweise durch eine Get-Operation. Eigenschaften von Issuer-Objekten können verändert oder erstellt werden, z.B. durch eine Post-Operation. Hierzu können die Issuer-Objekte über die UUID adressiert werden.

Der Zugriff auf und/oder das Erstellen/Verändern von Eigenschaften von Aktions-Objekten kann hierbei auf der so genannten Element-Ebene erfolgen. Der Zugriff und/oder das Erstellen/Verändern kann hierbei von dem Notifikations-Manager ermöglicht werden. Allerdings können auch andere Teilnehmer des Fahrzeug-Kommunikationsnetzwerks auf Eigenschaften von Aktions-Objekte zugreifen bzw. diese erstellen oder verändern. Für das Erstellen oder Verändern von Eigenschaften von Issuer-Objekten kann die Angabe der Eigenschaft active zwingend sein.

Ein Whitelist-Objekt kann eine, mehrere oder alle der in Tabelle 4 aufgelisteten Eigenschaften aufweisen. Selbstverständlich kann ein Whitelist-Objekt aber auch noch weitere und/oder alternative Eigenschaften aufweisen.

**Tabelle 4**

| Name | Eigenschaft | Typus | Format |
|---|---|---|---|
| allowedlssuers | Information über Teilnehmer, deren Notifikations-Daten akzeptiert werden | Datenfeld | |
| Name | Name der Aktion | String | |
| Id | Identifikation | String | UUID |
| Objekt-URI (Objekt-Uniform Resource Identifier) | String | URI | |

Auf Whitelist-Objekte kann zugegriffen werden, beispielsweise durch eine Get-Operation. Whitelist -Objekte können erstellt werden, z.B. durch eine Post-Operation. Der Zugriff auf und das Erstellen von Whitelist -Objekten kann hierbei auf der Ressourcen-Ebene erfolgen. Der Zugriff und das Erstellen kann hierbei von dem Notifikations-Manager ermöglicht werden. Allerdings können auch andere Teilnehmer des Fahrzeug-Kommunikationsnetzwerks auf Whitelist -Objekte zugreifen bzw. diese erstellen. Für das Erstellen von Whitelist-Objekten kann die Angabe einer, mehrerer oder aller der folgend angeführten Eigenschaften zwingend sein:allowedlssuer, name.

Auf Eigenschaften von Whitelist-Objekten kann zugegriffen werden, beispielsweise durch eine Get-Operation. Eigenschaften von Whitelist -Objekten können verändert oder erstellt werden, z.B. durch eine Post-Operation. Eigenschaften von Whitelist -Objekten können gelöscht werden, z.B. durch eine Delete-Operation. Hierzu können die Whitelist -Objekte über die UUID adressiert werden.

Der Zugriff auf, das Erstellen/Verändern von und/oder das Löschen von Eigenschaften von Whitelist -Objekten kann hierbei auf der so genannten Element-Ebene erfolgen. Der Zugriff, das Erstellen/Verändern und/oder das Löschen kann hierbei von dem Notifikations-Manager ermöglicht werden. Allerdings können auch andere Teilnehmer des Fahrzeug-Kommunikationsnetzwerks auf Eigenschaften von Whitelist -Objekte zugreifen bzw. diese erstellen oder verändern oder löschen. Für das Erstellen oder Verändern von Eigenschaften von Whitelist -Objekten kann die Angabe einer oder beider der folgend angeführten Eigenschaften zwingend sein: allowedlssuers, name.

Notifikations-Objekte, Aktions-Objekte, Issuer-Objekte und/oder Whitelist-Objekte können hierbei von Teilnehmern des Fahrzeug-Kommunikationsnetzwerks erstellt werden. Weiter können diese an anderen Teilnehmer übertragen werden, insbesondere an den Notifikations-Manager. Dieser kann die Objekte speichern und, wenn gewünscht, an weitere Teilnehmer übertragen. Auf vom Notifikations-Manager gespeicherte Objekte oder deren Eigenschaften können hierbei auch andere Teilnehmer zugreifen

In einer weiteren Ausführungsform überträgt der Notifikations-Manager die Notifikations-Daten nur an ausgewählte, zu notifizierende Teilnehmer. In diesem Fall kann also der Notifikations-Manager die von dem notifizierenden Teilnehmer übertragenen Notifikations-Daten nicht an alle, insbesondere nur an einen oder mehrere, jedoch nicht alle, zu notifizierenden Teilnehmer, die beispielsweise beim Notifikations-Manager für die Übertragung von Notifikations-Daten registriert sind, übertragen.

Alternativ oder kumulativ Teilnehmer überträgt der Notifikations-Manager an einen zu notifizierenden Teilnehmer nur einen teilnehmerspezifischen Teil der gesamten Notifikations-Daten. In diesem Fall kann also der Notifikations-Manager nicht alle von dem notifizierenden Teilnehmer übertragenen Notifikations-Daten an einen zu notifizierenden Teilnehmer, sondern nur einen teilnehmerspezifischen Teil dieser Notifikations-Daten übertragen. Hierbei kann der zu notifizierende Teilnehmer beispielsweise beim Notifikations-Manager für die Übertragung nur dieses teilnehmerspezifischen Teils der Notifikations-Daten registriert sein.

Die Auswahl der zu notifizierenden Teilnehmer und/oder des teilnehmerspezifischen Teils erfolgt durch eine Filterung. Wichtig ist, dass durch die Filterung nicht der kodierte Inhalt der Notifikations-Daten, sondern nur deren Empfänger bzw. der Teil der zu übertragenen Teile ausgewählt werden.

Hierbei können verschiedene Filterkriterien existieren, die zur Bestimmung der ausgewählten Teilnehmer bzw. des zu übertragenden, teilnehmerspezifischen Teils ausgewertet werden. So kann die Auswahl beispielsweise in Abhängigkeit einer Tageszeit, in Abhängigkeit einer Identität eines Fahrzeuginsassen, beispielsweise eines Fahrzeugführers, in Abhängigkeit von aktuellen fahrdynamischen Größen, beispielsweise einer Geschwindigkeit, oder weiteren Kriterien erfolgen. So kann beispielsweise ein bestimmter Fahrzeugführer festlegen, dass Inhalte von Notifikations-Daten nur von Anzeigeeinrichtungen, jedoch nicht von Audiowiedergabeeinrichtungen ausgegeben werden sollen. In diesem Fall können also die Notifikations-Daten nur an Teilnehmer übertragen werden, die eine visuelle Wiedergabe durchführen bzw. steuern können. Alternativ oder kumulativ kann an einen Teilnehmer, der eine audiovisuelle Wiedergabe durchführen oder steuern kann, nur ein Teil der Notifikations-Daten übertragen werden, der nur visuell ausgebbare Informationen kodiert.

Bevorzugt kann eine Filterung in Abhängigkeit eines Whitelist-Objekts erfolgen, wobei das Whitelist-Objekt von einem Teilnehmer erstellt wurde. Das Whitelist-Objekt kann hierbei von dem Teilnehmer an den Notifikations-Manager übertragen und vom Notifikations-Manager gespeichert werden. Insbesondere können dann die zu notifizierenden Teilnehmer in Abhängigkeit von Informationen ausgewählt werden, die in von ihnen erzeugten Whitelist-Objekten kodiert sind. Beispielsweise kann ein zu notifizierender Teilnehmer nur dann ausgewählt werden, wenn Notifikations-Daten von einem Teilnehmer stammen, der unter der Eigenschaft "allowedlssuers" im von dem ausgewählten Teilnehmer erzeugten Whitelist-Objekt kodiert ist. Weiter beispielsweise kann an einen zu notifizierenden Teilnehmer nur ein Teil der Notifikations-Daten übertragen werden, der unter einer weiteren Eigenschaft im von diesem Teilnehmer erzeugten Whitelist-Objekt kodiert ist.

In einer bevorzugten Ausführungsform werden die zu notifizierenden Teilnehmer und/oder der teilnehmerspezifische Teil der Notifikations-Daten in Abhängigkeit eines Formats und/oder eines Inhalts der Notifikations-Daten ausgewählt. Wird z.B., insbesondere durch den Notifikations-Manager, detektiert, dass die von den Notifikations-Daten kodierten Informationen reine Audioinformationen sind, so kann der Notifikations-Manager die Notifikations-Daten nur an solche zu notifizierenden Teilnehmer übertragen, die zur Ausgabe von Audioinformationen geeignet sind. Kodieren die Notifikations-Daten z.B. visuell und akustisch ausgebbare Informationen, so kann der Notifikations-Manager nur den Teil der Notifikations-Daten, der die visuell ausgebbaren Informationen kodiert, an einen zu notifizierenden Teilnehmer übertragen, der sich für die Übertragung nur visuell ausgebbarer Informationen registriert hat.

Hierdurch ergibt sich in vorteilhafter Weise eine effizientere Nutzung des Fahrzeug-Kommunikationsnetzwerks, da gezielt und somit weniger Daten übertragen werden müssen.

In einer weiteren Ausführungsform überträgt der zu notifizierende Teilnehmer mindestens ein Filterkriterium an den Notifikations-Manager. Das Filterkriterium wird zur Filterung und somit zur Auswahl der zu notifizierenden Teilnehmer ausgewertet. Beispielsweise kann als Filterkriterium die Information übertragen werden, dass der Teilnehmer nur zur Wiedergabe von Audioinformationen geeignet ist. Dann wird der Teilnehmer nicht ausgewählt, wenn die Notifikations-Daten keine Audiodaten kodieren. Hierdurch ergibt sich in vorteilhafter Weise ebenfalls ein effizienter Betrieb des Fahrzeug-Kommunikationsnetzwerks.

Zum Beispiel kann der zu notifizierende Teilnehmer ein Whitelist-Objekt übertragen, welches Informationen über die Teilnehmer kodiert, deren Notifikations-Daten an den zu notifizierenden Teilnehmer übertragen werden sollen. Auch kann im Whitelist-Objekt eine Information über einen Teil der Notifikations-Daten kodiert sein, die an den zu notifizierenden Teilnehmer übertragen werden sollen.

In einer weiteren Ausführungsform erfolgt mittels der Datenübertragung zwischen Teilnehmern des Fahrzeug-Kommunikationsnetzwerks eine zustandslose Kommunikation.

Eine derartige zustandslose Kommunikation ist in der eingangs erläuterten

DE 10 2014 201 948 A1 beschrieben, auf deren Offenbarungsgehalt hiermit vollumfänglich Bezug genommen wird.

Zustandslos kann insbesondere bedeuten, dass Daten einer vollständigen clientseitigen Anfrage und/oder Daten einer vollständigen serverseitigen Antwort jeweils in genau einem Übertragungsvorgang übertragen werden. Die serverseitige Antwort kann hierbei eine Antwort auf die clientseitige Anfrage sein, wobei eine solche Antwort als korrespondierende Antwort bezeichnet werden kann. Unter anderem kann zustandslos auch bedeuten, dass alle Informationen, die zur Ausführung mindestens einer serverseitigen Operation notwendig sind, in genau einem Übertragungsvorgang vom Client zum Server übertragen werden. Weiter kann zustandslos bedeuten, dass alle Informationen, die zur Ausführung mindestens einer clientseitigen Operation notwendig sind, in genau einem Übertragungsvorgang vom Server zum Client übertragen werden. Weiter kann zustandslos auch bedeuten, dass alle Informationen, die zur Bestätigung einer durch einen Server angefragten Operation notwendig sind, in genau einem Übertragungsvorgang vom Client zu dem Server übertragen werden. Weiter kann zustandslos auch bedeuten, dass alle Informationen, die zur Bestätigung einer durch einen Client angefragten Operation notwendig sind, in genau einem Übertragungsvorgang vom Server zu dem Client übertragen werden. Insbesondere ist es hierdurch nicht mehr erforderlich, eine clientseitige Anfrage als auch eine serverseitige Antwort in einer mehrere Übertragungsvorgänge umfassenden Sequenz wie bisher üblich zu übertragen. Ein einzelner Übertragungsvorgang bezeichnet hierbei einen Teil einer Gesamtsequenz, die zu einer Synchronisation der Zustände in Client und Server notwendig ist.

Anfragen, insbesondere clientseitige Anfragen, können hierbei z.B. eine Lese-Anfrage, eine Schreib-Anfrage oder eine Löschen-Anfrage sein, die jeweils serverseitig oder clientseitig eine Lese-Operation, eine Schreib-Operation oder eine Löschen-Operation auslösen. Eine Schreib-Anfrage kann hierbei eine Erzeugen-Anfragen oder eine Aktualisierungs-Anfrage sein. Insbesondere können auch mindestens eine Anfrage und/oder Antwort in dem vorhergehend erläuterten Anmeldevorgang, eine Adress-Speicher-Anfrage eine Dienst-Kategorie-Anfrage, eine Dienst-Ausführ-Anfrage, eine Dienst-Anfrage sowie entsprechende Antworten Anfragen und Antworten einer zustandslosen Datenübertragung sein.

Mit anderen Worten kann zustandslos auch bedeuten, dass ein Teilnehmer keine Informationen über den Zustand eines weiteren Teilnehmers braucht, um mit diesem eine Datenübertragung für einen gewünschten Zweck, z. B. zur Nutzung eines Dienstes, durchzuführen. Auch kann zustandslos bedeuten, dass die Teilnehmer Operationen aufgrund der in dem einen Übertragungsvorgang übertragenen Informationen ausführen können und keine weitere Kenntnisse benötigen, insbesondere keine weiteren Kenntnisse über bisher erfolgte Kommunikationsvorgänge und/oder die darin übermittelten Informationen.

Als Alternative zu der abrufbaren Speicherung von Dienst-Kategorien und diesen zugeordnete Dienst-Adressen durch den/in dem Registrierungs-Server kann die Ermittlung von Diensten, die von Servern über das Fahrzeug-Kommunikationsnetzwerk bereitgestellt werden können, auch durch ein so genanntes Multicast-Verfahren erfolgen. Hierbei kann ein Teilnehmer Informationen über die von ihm bereitgestellten Dienste, insbesondere Informationen über deren Funktionalität und/oder zu der entsprechenden Dienst-Kategorie, sowie die zugeordnete Dienst-Adresse an alle Teilnehmer des Fahrzeug-Kommunikationsnetzwerks übertragen, z. B. periodisch. In diesem Fall können Teilnehmer die entsprechenden Informationen speichern und nachfolgend zur Ermittlung und Ausführung von Diensten nutzen. Dies kann beispielsweise über den SOME/IP-Standard erfolgen.

Weiter vorgeschlagen wird ein Fahrzeug-Kommunikationsnetzwerk, wobei das Fahrzeug-Kommunikationsnetzwerk Teilnehmer umfasst, wobei mindestens ein Teilnehmer des Fahrzeug-Kommunikationsnetzwerks ein Fahrzeug-Teilnehmer ist, der in dem Fahrzeug angeordnet ist. Die Teilnehmer können hierbei datentechnisch über das Fahrzeug-Kommunikationsnetzwerk verbunden sein. Eine datentechnische Verbindung kann hierbei eine drahtgebundene oder aber eine drahtlose Verbindung sein.

Erfindungsgemäß bildet ein Teilnehmer des Fahrzeugkommunikationsnetzwerks einen Notifikations-Manager des Fahrzeug-Kommunikationsnetzwerks oder stellt diesen bereit. Vorzugsweise bildet der Fahrzeug-Teilnehmer den Notifikations-Manager oder stellt diesen bereit. Weiter sind von einem notifizierenden Teilnehmer des Fahrzeug-Kommunikationsnetzwerks Notifikations-Daten an den Notifikations-Manager übertragbar, wobei von dem Notifikations-Manager zumindest ein Teil der Notifikations-Daten an mindestens einen zu notifizierenden Teilnehmer des Fahrzeug-Kommunikationsnetzwerks übertragbar sind.

Mittels des Fahrzeug-Kommunikationsnetzwerks ist in vorteilhafter Weise ein Verfahren gemäß einer der in dieser Offenbarung beschriebenen Ausführungsformen durchführbar. Somit kann das Fahrzeug-Kommunikationsnetzwerk derart ausgebildet oder konfiguriert sein, dass ein solches Verfahren mittels des Fahrzeug-Kommunikationsnetzwerks durchführbar ist.

Das Fahrzeug-Kommunikationsnetzwerk kann neben mindestens einem Fahrzeug-Teilnehmer auch weitere Fahrzeug-Teilnehmer und/oder weitere fahrzeugexterne Teilnehmer, insbesondere mobile Endgeräte oder fahrzeugexterne Server-Einrichtungen, umfassen. Weiter kann das Fahrzeug-Kommunikationsnetzwerk Datenvermittlungseinrichtungen oder -teilnehmer umfassen.

Weiter vorgeschlagen wird ein Teilnehmer eines Fahrzeug-Kommunikationsnetzwerks gemäß einer der in dieser Offenbarung erläuterten Ausführungsformen. Hierbei bildet der Teilnehmer einen Notifikations-Manager des Fahrzeug-Kommunikationsnetzwerks oder stellt diesen bereit. Der Teilnehmer kann insbesondere ein Fahrzeug-Teilnehmer sein.

Weiter vorgeschlagen wird ein Fahrzeug, wobei das Fahrzeug mindestens einen Fahrzeug-Teilnehmer eines Fahrzeug-Kommunikationsnetzwerks umfasst, wobei ein Teilnehmer des Fahrzeug-Kommunikationsnetzwerks, insbesondere der Fahrzeug-Teilnehmer, einen Notifikations-Manager des Fahrzeug-Kommunikationsnetzwerks bildet oder bereitstellt.

Die Erfindung wird anhand eines Ausführungsbeispiels näher erläutert. Die Figuren zeigen:
- Fig. 1: ein schematisches Blockschaltbild eines erfindungsgemäßen Fahrzeug-Kommunikationsnetzwerks und
- Fig. 2: eine schematische Darstellung eines erfindungsgemäßen Fahrzeugs.

Nachfolgend bezeichnen gleiche Bezugszeichen Elemente mit gleichen oder ähnlichen technischen Merkmalen.

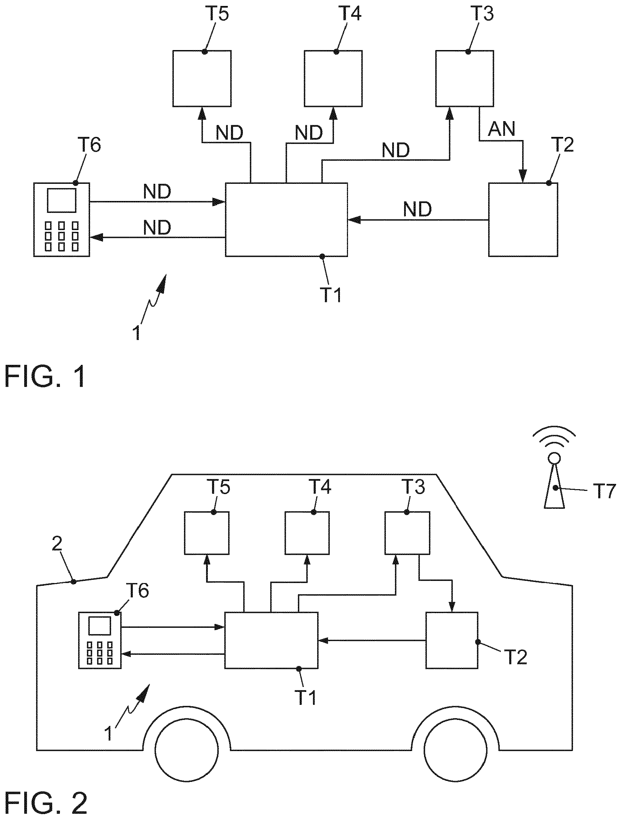

Fig. 1 zeigt ein schematisches Blockschaltbild eines Fahrzeug-Kommunikationsnetzwerks 1, wobei das Fahrzeug-Kommunikationsnetzwerk 1 sechs Teilnehmer T1, T2, T3, T4, T5, T6 umfasst. Hierbei ist ein erster Teilnehmer T1 ein Fahrzeug-Teilnehmer und als Notifikations-Manager ausgebildet. Ein zweiter Teilnehmer T2 ist ebenfalls ein Fahrzeug-Teilnehmer und bildet beispielsweise ein Steuergerät für eine akustische Wiedergabe von Audioinformationen. Ein dritter Teilnehmer T3 ist ebenfalls ein Fahrzeug-Teilnehmer und bildet z.B. ein Steuergerät für eine Anzeige-Eingabe-Einrichtung des Fahrzeugs 2 (siehe Fig. 2), beispielsweise einen sogenannten Touchscreen.

Ein vierter Teilnehmer T4 ist ebenfalls ein Fahrzeug-Teilnehmer und bildet beispielsweise ein Steuergerät einer Anzeigeeinrichtung, beispielsweise eines Head-Up-Displays im Fahrzeug 2.

Ein fünfter Teilnehmer T5 ist ebenfalls ein Fahrzeug-Teilnehmer und kann beispielsweise ein Steuergerät für einen Lautsprecher im Fahrzeug bilden.

Ein sechster Teilnehmer T6 ist ein fahrzeugexterner Teilnehmer und beispielsweise als Mobilfunkgerät ausgebildet.

Die Teilnehmer T1, T2, T3, T4, T5, T6 können Dienste über das Fahrzeug-Kommunikationsnetzwerk 1 bereitstellen. Somit können die Teilnehmer T1, ..., T6 als Server ausgebildet sein. Selbstverständlich können die Teilnehmer T1, ..., T6 auch Clients bilden, insbesondere wenn sie nicht dargestellte Dienste weiterer Server nutzen.

Die Teilnehmer T1, ..., T6 im Fahrzeug-Kommunikationsnetzwerk 1 sind datentechnisch verbunden, insbesondere drahtgebunden, z.B. über ein Bussystem, oder drahtlos.

In dem in Fig. 1 dargestellten Ausführungsbeispiel bilden der zweite Teilnehmer T2 und der sechste Teilnehmer T6 notifizierende Teilnehmer des Fahrzeug-Kommunikationsnetzwerks 1. Der dritte, vierte, fünfte Teilnehmer T3, T4, T5 sowie der sechste Teilnehmer T6 bilden zu notifizierende Teilnehmer des Fahrzeug-Kommunikationsnetzwerks. Somit kann der notifizierende Teilnehmer T6 auch ein zu notifizierender Teilnehmer T6 sein. Die zu notifizierenden Teilnehmer T3, T4, T5, T6 können als solche beim Notifikations-Manager registriert sein.

Durch den fünften Teilnehmer T5 kann eine akustische Ausgabe zumindest eines Teils von in Notifikations-Daten ND kodierten Informationen an einen Nutzer durchgeführt oder gesteuert werden. Durch den dritten und vierten Teilnehmer T3, T4 kann eine optische Ausgabe, beispielsweise in Form einer visuell erfassbaren Darstellung, zumindest eines Teils der in den Notifikations-Daten ND kodierten Informationen an den Nutzer erfolgen. Auch über den sechsten Teilnehmer T6 kann eine solche optische Ausgabe erfolgen. Beispielsweise können der dritte, der vierte und der sechste Teilnehmer T3, T4, T6 die Informationen auf einer Anzeigeeinrichtung, z.B. einem Display, darstellen.

Es ist z.B. möglich, dass der sechste Teilnehmer T6 eine Textnachricht, beispielsweise eine SMS, empfängt und nach dem Empfang Notifikations-Daten ND an den Notifikations-Manager T1 überträgt, wobei diese Notifikations-Daten ND die Textinformationen der Kurznachricht kodieren.

Der Notifikations-Manager 1 kann nach Empfang dieser Notifikations-Daten ND vom sechsten Teilnehmer T6 diese Notifikations-Daten ND an den dritten, vierten und fünften Teilnehmer T3, T4, T5 übertragen.

Dann kann z.B. der dritte und der vierte Teilnehmer T3, T4 den Textinhalt z.B. durch entsprechende Symbole auf einer Anzeigeeinrichtung ausgeben. Der fünfte Teilnehmer T5 kann den Textinhalt beispielsweise akustisch ausgeben.

Hierbei können die vom sechsten Teilnehmer T6 übertragenen Notifikations-Daten ND an alle beim Notifikations-Manager T1 registrierten zu notifizierenden Teilnehmer T3, T4, T5 übertragen werden oder nur an ausgewählte zu notifizierende Teilnehmer T3, T4. Werden die Notifikations-Daten ND nur an ausgewählte Teilnehmer T3, T4 übertragen, so kann die Auswahl der zu notifizierenden Teilnehmer T3, T4 aus der Menge der registrierten Teilnehmer T3, T4, T5 in Abhängigkeit einer Filterung erfolgen. Beispielsweise kann diese Filterung in Abhängigkeit eines Inhalts der Notifikations-Daten ND erfolgen. So kann beispielsweise die Textnachricht nur an die zu notifizierenden Teilnehmer T3, T4 übertragen werden, die eine visuelle bzw. grafische Darstellung des Textes ermöglichen. In diesem Fall erfolgt also keine Übertragung der Notifikations-Daten ND vom Notifikations-Manager T1 an den fünften Teilnehmer T5, da dieser nur zur Audioausgabe geeignet ist.

Bei dem vorliegenden Beispiel ist zu beachten, dass auch der sechste Teilnehmer T6 einen beim Notifikations-Manager T1 registrierten, zu notifizierenden Teilnehmer bildet. Bildet jedoch ein registrierter, zu notifizierender Teilnehmer einen notifizierenden Teilnehmer bei einer Datenübertragung über den Notifikations-Manager, so ist es nicht zwingend, dass diese Notifikationsdaten ND wieder an den notifizierenden Teilnehmer zurückübertragen werden. In diesem Fall kann also die Menge aller registrierten, zu notifizierenden Teilnehmer nicht den notifizierenden Teilnehmer umfassen.

Die vom sechsten Teilnehmer T6 übertragenen Textinformationen können z.B. in Form von sogenannten passiven Notifikations-Daten ND übertragen werden. Hierbei umfasst der ausgebbare Teil der Informationen, die von den Notifikations-Daten ND kodiert werden, keine Informationen über eine Notifikations-Reaktion.

Im Gegensatz dazu können die vom zweiten Teilnehmer T2 übertragenen Notifikations-Daten auch Informationen über mindestens eine Notifikation-Reaktion kodieren. Beispielsweise kann der zweite Teilnehmer T2 Notifikations-Daten ND an den Notifikations-Manager übertragen, die Informationen über einen Titel und/oder weitere Eigenschaften eines Audioinhalts kodieren. Diese Notifikations-Daten ND können dann vom Notifikations-Manager wiederum an alle registrierten, zu notifizierenden Teilnehmer T3, T4, T5, T6 oder ausgewählte zu notifizierende Teilnehmer übertragen werden.

Weiter können diese Notifikations-Daten ND auch Informationen über mögliche Notifikations-Reaktionen kodieren, beispielsweise Informationen über ein Abspielen, ein Pausieren und ein Stoppen der Ausgabe des Audioinhalts. Insbesondere können diese Notifikations-Daten ND Informationen über mindestens eine Dienstadresse kodieren, wobei unter der Dienstadresse ein von einem Teilnehmer, insbesondere von dem zweiten Teilnehmer T2, bereitgestellter Dienst aufrufbar ist. Wird der Dienst aufgerufen, so kann beispielsweise ein Abspielen des Audioinhalts, ein Stoppen der Ausgabe des Audioinhalts oder ein Pausieren der Ausgabe des Audioinhalts bewirkt werden.

In diesem Fall kann insbesondere der dritte Teilnehmer T3 die Informationen über den Audioinhalt, also den Titel und/oder weitere Eigenschaften, visuell ausgeben. Weiter kann der dritte Teilnehmer T3 Informationen über die möglichen Notifikations-Reaktionen visuell ausgeben. Dies kann z.B. derart erfolgen, dass die ausgegebenen Informationen über die Notifikations-Reaktion einem Betätigungselement zugeordnet sind, beispielsweise einer Taste oder einem Eingabebereich auf dem Touchscreen, welches durch einen Nutzer betätigbar ist.

Durch Betätigung des entsprechenden Betätigungsfeldes, die beispielsweise ebenfalls von dem dritten Teilnehmer T3 detektiert werden kann, kann dieser dann die entsprechende Notifikations-Reaktion auslösen, insbesondere indem eine entsprechende Anfrage AN an die in den Notifikations-Daten kodierte Dienst-Adresse zum zweiten Teilnehmer T2 übertragen wird. Wird beispielsweise ein Betätigungselement betätigt, welches der ausgegebenen Information über die Reaktion "Pause" zugeordnet ist, so kann eine Anfrage AN vom dritten Teilnehmer T3 an die einem Pause-Dienst zugeordnete Dienst-Adresse des zweiten Teilnehmers T2 übertragen werden. In diesem Fall kann der zweite Teilnehmer T2 einen Pause-Dienst ausführen, der zum Pausieren der Ausgabe des Audioinhalts führt.

Die Teilnehmer T1, ..., T6 in dem Fahrzeug-Kommunikationsnetzwerk können zustandslos kommunizieren. Hierbei erfolgt die Datenübertragung zwischen den Teilnehmer T1, ..., T6 in einer zustandslosen Kommunikation.

Fig. 2 zeigt eine schematische Darstellung eines Fahrzeugs 2, wobei das Fahrzeug mehrere Fahrzeugteilnehmer T1, T2, T3, T4, T5 eines Fahrzeug-Kommunikationsnetzwerks 1 umfasst. Das Fahrzeug-Kommunikationsnetzwerk 1 umfasst weiter einen sechsten Teilnehmer T6. Bezüglich der Ausbildung und einem Verfahren zur Datenübertragung in dem Fahrzeug-Kommunikationsnetzwerk 1 kann auf die Erläuterungen zu Fig. 1 verwiesen werden.

Weiter dargestellt ist ein siebter Teilnehmer T7, der ein fahrzeugexterner Teilnehmer des Fahrzeug-Kommunikationsnetzwerks 1 bildet.

Hierbei ist ein erster Teilnehmer T1 des Fahrzeug-Kommunikationsnetzwerks als Notifikations-Manager des Fahrzeug-Kommunikationsnetzwerks 1 ausgebildet bzw. stellt einen solchen bereit.

### Bezugszeichenliste

- 1: Fahrzeug-Kommunikationsnetzwerk
- 2: Fahrzeug
- T1: erster Teilnehmer, Notifikations-Manager
- T2: zweiter Teilnehmer
- T3: dritter Teilnehmer
- T4: vierter Teilnehmer
- T5: fünfter Teilnehmer
- T6: sechster Teilnehmer
- T7: siebter Teilnehmer
- ND: Notifikations-Daten
- AN: Anfrage

## Patentansprüche

1. Verfahren zur Datenübertragung zwischen Teilnehmern (T1, T2, T3, T4, T5, T6) in einem Fahrzeug-Kommunikationsnetzwerk (1) eines Fahrzeugs (2), wobei mindestens ein Teilnehmer (T1) des Fahrzeug-Kommunikationsnetzwerks (1) ein Fahrzeug-Teilnehmer ist, der in dem Fahrzeug (2) angeordnet und fest verbaut und einen Notifikations-Manager des Fahrzeug-Kommunikationsnetzwerk (1) bildet oder bereitstellt, wobei ein notifizierender Teilnehmer (T2, T6) des Fahrzeug-Kommunikationsnetzwerk (1) Notifikations-Daten (ND) an den Notifikations-Manager überträgt, wobei der Notifikations-Manager zumindest einen Teil der Notifikations-Daten (ND) unmittelbar und ohne gesonderte Abfrage an mindestens einen zu notifizierenden Teilnehmer (T3, T4, T5, T6) des Fahrzeug-Kommunikationsnetzwerk (1) überträgt, **dadurch gekennzeichnet, dass**
die Notifikations-Daten (ND) in Form eines Datenobjekts übertragen werden, wobei
die Notifikations-Daten (ND) Informationen über mindestens eine Dienst-Adresse kodieren, wobei die Dienst-Adresse eine Eigenschaft eines Aktions-Objekts ist und unter der Dienstadresse ein von einem bereitstellenden Teilnehmer (T3, T4, T5, T6) des Fahrzeug-Kommunikationsnetzwerks (1) bereitgestellter Dienst aufrufbar ist, wobei der bereitstellende Teilnehmer der notifizierende Teilnehmer (T2, T6) oder ein von diesem verschiedener Teilnehmer (T3, T4, T5) ist.

2. Verfahren nach Anspruch 1, **dadurch gekennzeichnet, dass** der zu notifizierende Teilnehmer (T3, ..., T6) eine Ausgabe zumindest eines Teils der in den Notifikations-Daten (ND) kodierten Informationen an einen Nutzer durchführt.

3. Verfahren nach einem der Ansprüche 1 bis 2, **dadurch gekennzeichnet, dass** die Notifikations-Daten (ND) Informationen über mindestens eine Notifikations-Reaktion kodieren, wobei der Notifikations-Reaktion mindestens ein Dienst zugeordnet ist, der von einem bereitstellenden Teilnehmer (T3, T4, T5, T6) des Fahrzeug-Kommunikationsnetzwerks (1) bereitgestellt wird, wobei der bereitstellende Teilnehmer der notifizierende Teilnehmer (T2, T6) oder ein von diesem verschiedener Teilnehmer (T3, T4, T5) ist.

4. Verfahren nach Anspruch 3, **dadurch gekennzeichnet, dass** eine Nutzer-Reaktion detektiert und mindestens ein von einem Teilnehmer (T3, T4, T5, T6) des Fahrzeug-Kommunikationsnetzwerks (1), der der notifizierende Teilnehmer (T2, T6) oder ein von diesem verschiedener Teilnehmer (T3, T4, T5) ist, bereitgestellter, reaktionsspezifischer Dienst durch den notifizierten Teilnehmer aufgerufen wird.

5. Verfahren nach einem der vorangegangenen Ansprüche, **dadurch gekennzeichnet, dass** der Notifikations-Manager die Notifikations-Daten (ND) nur an ausgewählte, zu notifizierende Teilnehmer (T3,..., T6) überträgt, wobei die Auswahl der zu notifizierenden Teilnehmer durch eine Filterung erfolgt, und/oder dass der Notifikations-Manager an einen zu notifizierenden Teilnehmer (T3, T4, T5, T6) nur einen teilnehmerspezifischen Teil der gesamten Notifikations-Daten (ND) überträgt, wobei die Auswahl des teilnehmerspezifischen und zu übertragenden Teils durch eine Filterung erfolgt.

6. Verfahren nach Anspruch 5, **dadurch gekennzeichnet, dass** die zu notifizierenden Teilnehmer (T3,..., T6) und/oder der teilnehmerspezifische Teil der Notifikations-Daten (ND) in Abhängigkeit eines Formats und/oder eines Inhalts der Notifikations-Daten (ND) ausgewählt werden.

7. Verfahren nach Anspruch 5 oder 6, **dadurch gekennzeichnet, dass** der zu notifizierende Teilnehmer (T3,..., T6) mindestens ein Filterkriterium an den Notifikations-Manager überträgt.

8. Verfahren nach einem der vorangegangenen Ansprüche, **dadurch gekennzeichnet, dass** mittels der Datenübertragung zwischen Teilnehmern (T1, T2, T3, T4, T5, T6) des Fahrzeug-Kommunikationsnetzwerks (1) eine zustandslose Kommunikation erfolgt.

9. Teilnehmer für ein Fahrzeug-Kommunikationsnetzwerks (1), wobei der Teilnehmer (T1) einen Notifikations-Manager eines Fahrzeug-Kommunikationsnetzwerks (1) bildet oder bereitstellt, wobei der Notifikations-Manager eingerichtet ist, Notifikations-Daten (ND) von einem notifizierenden Teilnehmer (T2, T6) des Fahrzeug-Kommunikationsnetzwerks (1) zu empfangen und zumindest ein Teil der Notifikations-Daten (ND) an den mindestens einen zu notifizierenden Teilnehmer (T3,...,T6) des Fahrzeug-Kommunikationsnetzwerks (1) unmittelbar und ohne gesonderte Abfrage zu übertragen,
**dadurch gekennzeichnet, dass**
die Notifikations-Daten (ND) in Form eines Datenobjekts übertragen werden, wobei die Notifikations-Daten (ND) Informationen über mindestens eine Dienst-Adresse kodieren, wobei die Dienst-Adresse eine Eigenschaft eines Aktions-Objekts ist und unter der Dienstadresse ein von einem bereitstellenden Teilnehmer (T3, T4, T5, T6) des Fahrzeug-Kommunikationsnetzwerks (1) bereitgestellter Dienst aufrufbar ist, wobei der bereitstellende Teilnehmer der notifizierende Teilnehmer (T2, T6) oder ein von diesem verschiedener Teilnehmer (T3, T4, T5) ist.

10. Fahrzeug-Kommunikationsnetzwerk (1), wobei das Fahrzeug-Kommunikationsnetzwerk (1) Teilnehmer (T1, T2, T3, T4, T5, T6) umfasst, wobei mindestens ein Teilnehmer (T1) des Fahrzeug-Kommunikationsnetzwerks (1) ein Teilnehmer gemäß Anspruch 9 und ein Fahrzeug-Teilnehmer (T1) ist, der in dem Fahrzeug (2) angeordnet und fest verbaut ist, wobei dieser Notifikations-Manager, ein notifizierender Teilnehmer (T2, T6) und ein zu notifizierender Teilnehmer (T3,..., T6) dazu eingerichtet sind, dass von dem notifizierenden Teilnehmer (T2, T6) des Fahrzeug-Kommunikationsnetzwerks (1) Notifikations-Daten (ND) an den Notifikations-Manager und von dem Notifikations-Manager zumindest ein Teil der Notifikations-Daten (ND) an den mindestens einen zu notifizierenden Teilnehmer (T3,... ,T6) des Fahrzeug-Kommunikationsnetzwerks (1) unmittelbar und ohne gesonderte Abfrage übertragen werden,
**dadurch gekennzeichnet, dass**
die Notifikations-Daten (ND) in Form eines Datenobjekts übertragen werden, wobei die Notifikations-Daten (ND) Informationen über mindestens eine Dienst-Adresse kodieren, wobei die Dienst-Adresse eine Eigenschaft eines Aktions-Objekts ist und unter der Dienstadresse ein von einem bereitstellenden Teilnehmer (T3, T4, T5, T6) des Fahrzeug-Kommunikationsnetzwerks (1) bereitgestellter Dienst aufrufbar ist, wobei der bereitstellende Teilnehmer der notifizierende Teilnehmer (T2, T6) oder ein von diesem verschiedener Teilnehmer (T3, T4, T5) ist.

11. Fahrzeug, wobei das Fahrzeug (2) mindestens einen Fahrzeug-Teilnehmer (T1) eines Fahrzeug-Kommunikationsnetzwerks (1) gemäß Anspruch 10 umfasst, wobei der Fahrzeug-Teilnehmer (T1) ein Teilnehmer nach Anspruch 9 ist.

## Claims

1. Method for data transmission between subscribers (T1, T2, T3, T4, T5, T6) in a vehicle communication network (1) of a vehicle (2), wherein at least one subscriber (T1) of the vehicle communication network (1) is a vehicle subscriber arranged and permanently installed in the vehicle (2) and forming or providing a notification manager of the vehicle communication network (1), wherein a notifying subscriber (T2, T6) of the vehicle communication network (1) transmits notification data (ND) to the notification manager, wherein the notification manager transmits at least one part of the notification data (ND), directly and without a separate interrogation, to at least one subscriber (T3, T4, T5, T6) to be notified in the vehicle communication network (1),
**characterized in that**
the notification data (ND) are transmitted in the form of a data object, wherein the notification data (ND) code information about at least one service address, wherein the service address is a property of an action object and a service provided by a providing subscriber (T3, T4, T5, T6) of the vehicle communication network (1) is able to be called up under the service address, wherein the providing subscriber is the notifying subscriber (T2, T6) or a subscriber (T3, T4, T5) different therefrom.

2. Method according to Claim 1, **characterized in that** the subscriber (T3, ..., T6) to be notified carries out an output of at least one part of the information coded in the notification data (ND) to a user.

3. Method according to any of Claims 1 to 2, **characterized in that** the notification data (ND) code information about at least one notification reaction, wherein the notification reaction is assigned at least one service provided by a providing subscriber (T3, T4, T5, T6) of the vehicle communication network (1), wherein the providing subscriber is the notifying subscriber (T2, T6) or a subscriber (T3, T4, T5) different therefrom.

4. Method according to Claim 3, **characterized in that** a user reaction is detected and at least one reactionspecific service provided by a subscriber (T3, T4, T5, T6) of the vehicle communication network (1), which is the notifying subscriber (T2, T6) or a subscriber (T3, T4, T5) different therefrom, is called up by the notified subscriber.

5. Method according to any of the preceding claims, **characterized in that** the notification manager transmits the notification data (ND) only to selected subscribers (T3,..., T6) to be notified, wherein the subscribers to be notified are selected by means of a filtering, and/or **in that** the notification manager transmits only a subscriber-specific part of the entire notification data (ND) to a subscriber (T3, T4, T5, T6) to be notified, wherein the subscriber-specific part to be transmitted is selected by means of a filtering.

6. Method according to Claim 5, **characterized in that** the subscribers (T3,..., T6) to be notified and/or the subscriber-specific part of the notification data (ND) are/is selected depending on a format and/or a content of the notification data (ND).

7. Method according to Claim 5 or 6, **characterized in that** the subscriber (T3,..., T6) to be notified transmits at least one filter criterion to the notification manager.

8. Method according to any of the preceding claims, **characterized in that** a stateless communication is effected by means of the data transmission between subscribers (T1, T2, T3, T4, T5, T6) of the vehicle communication network (1).

9. Subscriber for a vehicle communication network (1), wherein the subscriber (T1) forms or provides a notification manager of a vehicle communication network (1), wherein the notification manager is configured to receive notification data (ND) from a notifying subscriber (T2, T6) of the vehicle communication network (1) and to transmit at least one part of the notification data (ND) to the at least one subscriber (T3,...,T6) to be notified in the vehicle communication network (1) directly and without a separate interrogation,
**characterized in that**
the notification data (ND) are transmitted in the form of a data object, wherein the notification data (ND) code information about at least one service address, wherein the service address is a property of an action object and a service provided by a providing subscriber (T3, T4, T5, T6) of the vehicle communication network (1) is able to be called up under the service address, wherein the providing subscriber is the notifying subscriber (T2, T6) or a subscriber (T3, T4, T5) different therefrom.

10. Vehicle communication network (1), wherein the vehicle communication network (1) comprises subscribers (T1, T2, T3, T4, T5, T6), wherein at least one subscriber (T1) of the vehicle communication network (1) is a subscriber according to Claim 9 and a vehicle subscriber (T1) arranged and permanently installed in the vehicle (2), wherein this notification manager, a notifying subscriber (T2, T6) and a subscriber (T3,..., T6) to be notified are configured such that notification data (ND) are transmitted to the notification manager by the notifying subscriber (T2, T6) of the vehicle communication network (1) and at least one part of the notification data (ND) is transmitted to the at least one subscriber (T3,...,T6) to be notified in the vehicle communication network (1) by the notification manager, directly and without a separate interrogation,
**characterized in that**
the notification data (ND) are transmitted in the form of a data object, wherein the notification data (ND) code information about at least one service address, wherein the service address is a property of an action object and a service provided by a providing subscriber (T3, T4, T5, T6) of the vehicle communication network (1) is able to be called up under the service address, wherein the providing subscriber is the notifying subscriber (T2, T6) or a subscriber (T3, T4, T5) different therefrom.

11. Vehicle, wherein the vehicle (2) comprises at least one vehicle subscriber (T1) of a vehicle communication network (1) according to Claim 10, wherein the vehicle subscriber (T1) is a subscriber according to Claim 9.

## Revendications

1. Procédé de transmission de données entre des participants (T1, T2, T3, T4, T5, T6) dans un réseau de communication de véhicule (1) d'un véhicule (2), au moins un participant (T1) du réseau de communication de véhicule (1) étant un participant de véhicule qui est disposé et installé de manière fixe dans le véhicule (2) et qui constitue ou fournit un gestionnaire de notification du réseau de communication de véhicule (1), un participant émetteur de notification (T2, T6) du réseau de communication de véhicule (1) transmettant des données de notification (ND) au gestionnaire de notification, le gestionnaire de notification transmettant au moins une partie des données de notification (ND) directement et sans interrogation séparée à au moins un participant à notifier (T3, T4, T5, T6) du réseau de communication de véhicule (1),
**caractérisé en ce que**
les données de notification (ND) sont transmises sous la forme d'un objet de données, les données de notification (ND) codant des informations concernant au moins une adresse de service, l'adresse de service étant une propriété d'un objet d'action et un service fourni par un participant fournisseur (T3, T4, T5, T6) du réseau de communication de véhicule (1) pouvant être appelé à l'adresse de service, le participant fournisseur étant le participant émetteur de notification (T2, T6) ou un participant (T3, T4, T5) différent de celui-ci.

2. Procédé selon la revendication 1, **caractérisé en ce que** le participant à notifier (T3, ..., T6) effectue un envoi d'au moins une partie des informations codées dans les données de notification (ND) à un utilisateur.

3. Procédé selon l'une des revendications 1 à 2, **caractérisé en ce que** les données de notification (ND) codent des informations concernant au moins une réaction à la notification, la réaction à la notification étant associée à au moins un service qui est fourni par un participant fournisseur (T3, T4, T5, T6) du réseau de communication de véhicule (1), le participant fournisseur étant le participant émetteur de notification (T2, T6) ou un participant (T3, T4, T5) différent de celui-ci.

4. Procédé selon la revendication 3, **caractérisé en ce qu'**une réaction d'utilisateur est détectée et **en ce qu'**au moins un service spécifique à la réaction, fourni par un participant (T3, T4, T5, T6) du réseau de communication de véhicule (1), qui est le participant émetteur de notification (T2, T6) ou un participant (T3, T4, T5) différent de celui-ci, est appelé par le participant notifié.

5. Procédé selon l'une des revendications précédentes, **caractérisé en ce que** le gestionnaire de notification ne transmet les données de notification (ND) qu'à des participants à notifier (T3, ..., T6) sélectionnés, la sélection des participants à notifier étant effectuée par un filtrage, et/ou **en ce que** le gestionnaire de notification ne transmet à un participant à notifier (T3, T4, T5, T6) qu'une partie, spécifique au participant, de l'ensemble des données de notification (ND), la sélection de la partie spécifique au participant et à transmettre étant effectuée par filtrage.

6. Procédé selon la revendication 5, **caractérisé en ce que** les participants à notifier (T3, ..., T6) et/ou la partie des données de notification (ND) spécifique au participant sont sélectionnés en fonction d'un format et/ou d'un contenu des données de notification (ND).

7. Procédé selon la revendication 5 ou 6, **caractérisé en ce que** le participant à notifier (T3, ..., T6) transmet au moins un critère de filtrage au gestionnaire de notification.

8. Procédé selon l'une des revendications précédentes, **caractérisé en ce qu'**une communication sans état est effectuée au moyen de la transmission de données entre des participants (T1, T2, T3, T4, T5, T6) du réseau de communication de véhicule (1).

9. Participant à un réseau de communication de véhicule (1), le participant (T1) constituant ou fournissant un gestionnaire de notification d'un réseau de communication de véhicule (1), le gestionnaire de notification étant conçu pour recevoir des données de notification (ND) d'un participant à notifier (T2, T6) du réseau de communication de véhicule (1) et pour transmettre au moins une partie des données de notification (ND) audit au moins un participant à notifier (T3, ..., T6) du réseau de communication de véhicule (1) directement et sans interrogation séparée,
**caractérisé en ce que**
les données de notification (ND) sont transmises sous la forme d'un objet de données, les données de notification (ND) codant des informations concernant au moins une adresse de service, l'adresse de service étant une propriété d'un objet d'action et un service fourni par un participant fournisseur (T3, T4, T5, T6) du réseau de communication de véhicule (1) pouvant être appelé à l'adresse de service, le participant fournisseur étant le participant émetteur de notification (T2, T6) ou un participant (T3, T4, T5) différent de celui-ci.

10. Réseau de communication de véhicule (1), le réseau de communication de véhicule (1) comprenant des participants (T1, T2, T3, T4, T5, T6), au moins un participant (T1) du réseau de communication de véhicule (1) étant un participant selon la revendication 9 et un participant de véhicule (T1) qui est disposé et installé de manière fixe dans le véhicule (2), ce gestionnaire de notification, un participant émetteur de notification (T2, T6) et un participant à notifier (T3, ....T6) étant conçus pour que des données de notification (ND) soient transmises par le participant émetteur de notification (T2, T6) du réseau de communication de véhicule (1) au gestionnaire de notification et qu'au moins une partie des données de notification (ND) soient transmises par le gestionnaire de notification audit au moins un participant à notifier (T3, ..., T6) du réseau de communication de véhicule (1) directement et sans interrogation séparée,
**caractérisé en ce que**
les données de notification (ND) sont transmises sous la forme d'un objet de données, les données de notification (ND) codant des informations concernant au moins une adresse de service, l'adresse de service étant une propriété d'un objet d'action et un service fourni par un participant fournisseur (T3, T4, T5, T6) du réseau de communication de véhicule (1) pouvant être appelé à l'adresse de service, le participant fournisseur étant le participant émetteur de notification (T2, T6) ou un participant (T3, T4, T5) différent de celui-ci.

11. Véhicule, le véhicule (2) comprenant au moins un participant de véhicule (T1) d'un réseau de communication de véhicule (1) selon la revendication 10, le participant de véhicule (T1) étant un participant selon la revendication 9.
